# EUROPÄISCHE PATENTSCHRIFT

(11) **EP 2 649 292 B1**
(45) Veröffentlichungstag und Bekanntmachung des Hinweises auf die Patenterteilung: **18.02.2015**
(21) Anmeldenummer: 11799395.6
(22) Anmeldetag: 09.12.2011
(51) Int. Cl.: F02M 37/22, B01D 29/58, B01D 35/16, B01D 36/00

(54) **KRAFTSTOFFFILTER**
FUEL FILTER
FILTRE À CARBURANT

(30) Priorität: 10.12.2010 DE 102010062813
(43) Veröffentlichungstag der Anmeldung: 16.10.2013
(73) Patentinhaber: Mahle International GmbH, 70376 Stuttgart (DE)
(72) Erfinder: GÄNSWEIN, Matthias, 73732 Esslingen (DE); BRAUNHEIM, Michael, 73035 Göppingen (DE); GEBLER, Claude, Frédéric, 70469 Stuttgart (DE); HARR, Hartmut, 71111 Waldenbuch (DE); IGERC, Marc, A-9150 Bleiburg (AT); KOPPI, Peter, A-9412 Sankt Margarethen (AT); WAIBEL, Hans, 71686 Remseck Aldingen (DE); LIKA, Torsten, 70469 Stuttgart (DE)
(74) Vertreter: BRP Renaud & Partner mbB Rechtsanwälte Patentanwälte Steuerberater
(86) Internationale Anmeldenummer: PCT/EP2011/072320
(87) Internationale Veröffentlichungsnummer: WO 2012/076692

(56) Entgegenhaltungen:
- EP-A1- 1 974 786
- WO-A1-2004/082804
- WO-A1-2010/012617
- WO-A1-2011/113723
- DE-A1- 19 716 085

## Beschreibung

Die vorliegende Erfindung betrifft ein Kraftstofffilter, insbesondere ein Kraftstofffilter mit einem radial durchströmten Ringfilterelement.

Aus der DE 10 2006 060 128 A1 ist ein gattungsgemäßes Kraftstofffilter bekannt, welches als Kraftstofffilter an einem Verbrennungsmotor eines Kraftfahrzeuges eingesetzt ist. Insbesondere bei der Verwendung derartiger Kraftstofffilter als Kraftstofffilter ist es für eine lange Lebensdauer des Verbrennungsmotors wichtig, dass möglichst viel des noch im Kraftstoff enthaltenen Wassers herausgefiltert wird, um daraus resultierende Korrosionsprozesse innerhalb des Verbrennungsmotors zu unterbinden.

Aus der WO 2010/012617 A1 ist ein modular aufgebauter Kraftstofffilter bekannt.

Die vorliegende Erfindung beschäftigt sich mit dem Problem, für ein Kraftstofffilter der gattungsgemäßen Art eine verbesserte oder zumindest eine alternative Ausführungsform anzugeben, die sich insbesondere durch eine hohe Filterwirkung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Kraftstofffilter mit einem Gehäuse und einem darin angeordneten ersten Ringfilterelement zusätzlich mindestens ein vorzugsweise zwei weitere Ringfilterelemente vorzusehen und dadurch eine besonders hohe Filter- und Abscheidewirkung zu erzielen. Sämtliche der mindestens drei Ringfilterelemente sind dabei koaxial zueinander angeordnet, wobei zusätzlich zumindest zwei der drei Ringfilterelemente, in Axialrichtung versetzt zueinander angeordnet sind. Sämtliche Ringfilterelemente sind darüber hinaus in Reihe zueinander geschaltet und daher nacheinander durchströmt. Der Kraftstoff muss somit von der Rohseite zur Reinseite sämtliche der mindestens drei Ringfilterelemente durchströmen, worin die hohe Filterwirkung des erfindungsgemäßen Kraftstofffilters begründet liegt. Durch die koaxiale und in Axialrichtung versetzte Anordnung der einzelnen Ringfilterelemente lassen sich diese zudem einfach separat austauschen, wodurch das Kraftstofffilter insgesamt wartungsfreundlich aufgebaut werden kann. Durch die insgesamt mindestens drei Ringfilterelemente können somit auch drei oder mehr Filterstufen verwirklicht werden, wobei beispielsweise in der ersten Filterstufe, das heißt am ersten Ringfilterelement Schmutzpartikel herausgefiltert und eine zumindest geringe Koaleszenz des im Kraftstoff mitgeführten Wassers erreicht werden kann. Bei dieser vergleichsweise geringen Koaleszenz werden Wassertröpfchen etwas vergrößert, die dann am zweiten Ringfilterelement, das heißt an der zweiten Filterstufe, die beispielsweise als reine Koaleszerstufe ausgebildet ist, weiter koalesziert, das heißt weiter vergrößert werden. Als Material kann hier beispielsweise Zellulose, auch native Cellulose, verwendet werden, die insbesondere in Form eines Gewebes, eines Gewirkes, eines Gestricks oder eines Vlieses eingesetzt werden kann. In der nachfolgenden dritten Filterstufe, das heißt am dritten Ringfilterelement, kann dann ein feinmaschiges Netz aus hydrophobem Material vorgesehen sein, so dass das dritte Ringfilterelement als Endabscheider fungiert, der die von der ersten und zweiten Filterstufe vergrößerten Wassertröpfchen am Durchtritt hindert und abscheidet. Der durch die erste und zweite Filterstufe bereits vorgereinigte Kraftstoff wird somit an der dritten Filterstufe und durch das dritte Ringfilterelement nochmals gefiltert und zugleich entwässert. Mit dem erfindungsgemäßen mindestens dreistufigen Kraftstofffilter lässt sich somit eine besonders hohe und gute Filterwirkung, insbesondere im Hinblick auf Schmutz und Feststoffpartikel erzielen, ebenso wie eine deutlich verbesserte Entwässerung des gefilterten Kraftstoffs. Der gefilterte Kraftstoff enthält insgesamt weniger Restwasser, wodurch eine Korrosionsgefahr reduziert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erste Ausführungsform eines erfindungsgemäßen Kraftstofffilters,
- Fig. 2: eine Schnittdarstellung wie in Fig. 1, jedoch bei einer zweiten Ausführungsform, bei welcher das erste und das zweite Ringfilterelement koaxial und nicht axial beabstandet zueinander angeordnet sind,
- Fig. 3a: eine Schnittdarstellung durch eine mögliche Ausführungsform des zweiten Ringfilterelements,
- Fig. 3b: eine Ansicht auf das zweite Ringfilterelement gemäß der Ausführungsform nach Fig. 2.

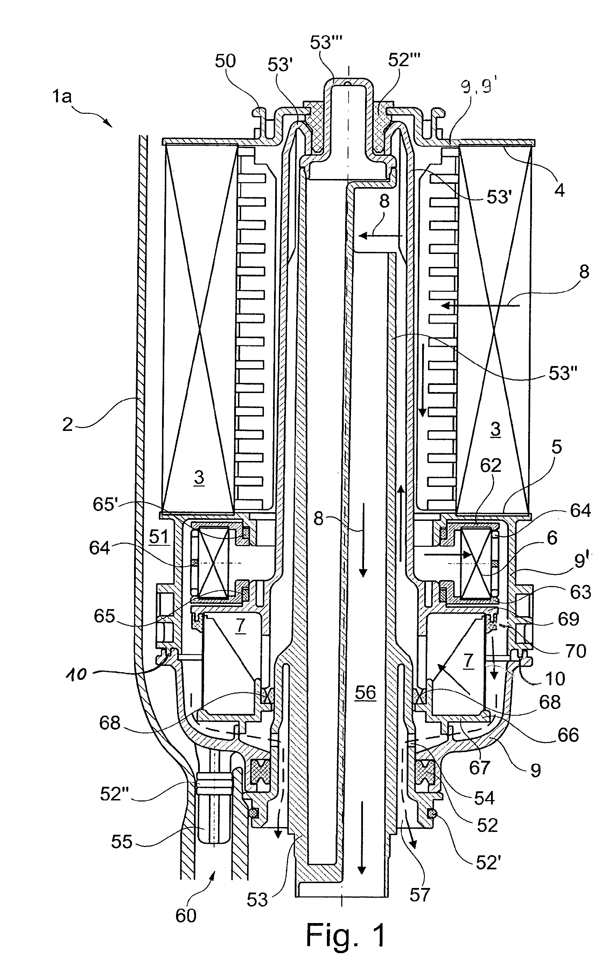

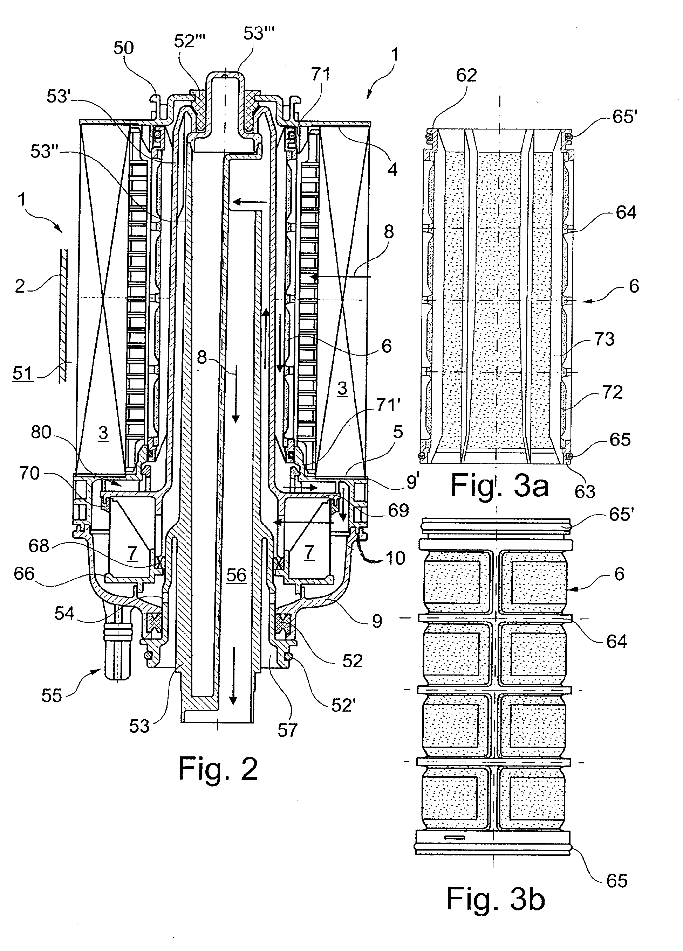

Entsprechend den Fig. 1 und 2, weist ein erfindungsgemäßes Kraftstofffilter 1 a, das unter Umständen generell auch als gewöhnliches Fluidfilter, insbesondere als Ölfilter, ausgebildet sein kann, ein lediglich angedeutetes Gehäuse 2 auf. Um die Ringfilterelemente 3, 6, 7 wechseln zu können, muss das Gehäuse 2 dazu geeignet sein, geöffnet zu werden. Zu diesem Zweck besitzt es einen sogenannten Gehäusetopf und einen damit lösbar verbundenen Gehäusedeckel. Das erste Ringfilterelement 3 ist mit dem Gehäuse 2 durch Rastmittel 50 verbunden. Dadurch kann beim Öffnen des Gehäuses 2 das erste Ringfilterelement 3 mittels des damit verrasteten Gehäuseteils aus dem anderen Gehäuseteil entnommen werden. In der erfindungsgemäßen Ausführung sind alle Ringfilterelemente 3, 6, 7 mit einander verbunden, so dass beim Öffnen des Gehäuses 2 die Filtereinrichtung1 komplett aus dem Gehäuse 2 des Kraftstofffilter 1 a entnehmbar ist. Natürlich kann der Aufbau auch so gewählt werden, dass nur Teile der Filtereinrichtung 1 aus dem Gehäuse 2 entnommen werden können und der Rest im Gehäuse 2 verbleibt oder getrennt entnehmbar ist. Die erfindungsgemäße Filtereinrichtung besteht aus mindestens drei Ringfilterelementen 3, 6, 7, Adapterelementen 9, 9'und einem Funktionsträger 53. Das Gehäuse 2 ist für die Funktion zwingend erforderlich, aber hier nicht Teil der Filtereinrichtung 1.

In dem Gehäuse 2 ist ein erstes Ringfilterelement 3 angeordnet, das eine obere und eine untere Endscheibe 4 und 5 aufweist. Wobei hier oben und unten sich auf die Fig. 1 bezieht und nicht zwingend auf die Einbaulage in einem Kraftfahrzeug. Vorzugsweise ist die Filtereinrichtung 1 stehend oder hängend im Kraftstofffilter 1 a eingebaut, wobei oben in der Fig. 1 auch oben bzgl. der Einbaulage bedeutet. Die obere Endscheibe 4 weist die Rastmittel 50 auf mit der das erste Ringfilterelement 3 an dem einen Gehäuseteil drehbar befestigt ist. Die untere Endscheibe 5 des ersten Ringfilterelementes 3 ist vorzugsweise flach ausgebildet. Damit festverbunden ist das Adapterelement 9'. Es kann direkt mit der unteren Endscheibe 5 zusammen hergestellt werden oder aber nach Herstellung des ersten Filterelementes 3 mit der unteren Endscheibe 5 durch geeignete Verfahren, wie z.B. Verschweißen, verbunden werden.

An diesem Adapterelement 9', das mit der unteren Endscheibe 5 des ersten Filterelementes 3 verbunden ist, kann ein weiteres Adapterelement 9 befestigt werden. Falls es gewünscht ist die weiteren Ringfilterelemente 6, 7 austauschbar zu machen, kann eine Verbindung 10 zwischen Adapterelement 9 und 9' lösbar sein, z.B. durch Verschraubung, Verklipsung, etc.. Wichtig ist, dass diese Verbindung 10 der beiden Adapterelemente 9 und 9' zum Rohraum 51 abgedichtet ist. Diese beiden Adapterelemente 9 und 9'bilden eine Art Topf, der mittels einer Dichtung 52 gegenüber einem Dom des Gehäuses 2 oder einem Dom eines Funktionsträger 53, der in dem Gehäuse 2 verbleiben kann, dichtend befestigt ist. Das Adapterelement 9 besitzt ferner einen angeformten Fortsatz 55 der einen Leerlaufkanal 60 der Filtereinrichtung 1 bei im Gehäuse 2 eingesetzter Filtereinrichtung 1 verschließt.

Der Funktionsträger 53 besitzt eine Öffnung 54 durch die das aus dem Kraftstoff abgeschiedene Wasser von der Reinseite des ersten Ringfilterelementes 3 ablaufen kann in einen nicht näher gezeigten Wassersammelraum, der sich unterhalb der Filtereinrichtung 1 befinden kann. Der Funktionsträger 53 besteht aus mehreren Teilen 53', 53" und 53"'. Das innere Teil 53" enthält einen Ablaufkanal 56 der Reinseite, an diesem wird das Adapterelement 9 dicht angebracht. Das äußere Teil 53' bildet zusammen mit einem Vorsprung 69 die Halterung für das dritte Ringfilterelement 7.

Bei beiden Ausführungsbeispielen ist das Adapterelement 9 gegenüber dem Dom des Funktionsträgers 53 mittels der Dichtung 52 abgedichtet und somit lösbar an diesem befestigt. Der Funktionsträger 53 beinhaltet einen Abflusskanal 56 für Kraftstoff auf der Reinseite der Filtereinrichtung 1 und in seinem unteren Teil eine Öffnung 54 und einen zugehörigen Wasserablaufkanal 57. Mittels einer weiteren Dichtung 52' ist der Funktionsträger 53 gegenüber dem Gehäuse 2 gedichtet.

Erfindungsgemäß sind nun zusätzlich ein zweites Ringfilterelement 6 sowie ein drittes Ringfilterelement 7 vorgesehen. Sämtliche dieser Ringfilterelemente 3, 6 und 7 sind dabei koaxial zueinander angeordnet, wobei zusätzlich zumindest zwei der insgesamt drei Ringfilterelemente 3, 6, 7 in Axialrichtung versetzt zueinander angeordnet sind. Betrachtet man die Ausführungsform des erfindungsgemäßen Kraftstofffilters 1a nach der Fig. 1, so sind sämtliche Ringfilterelemente 3, 6 und 7 in Axialrichtung versetzt zueinander und insbesondere beabstandet zueinander angeordnet, wogegen bei einer zweiten Ausführungsform, die in der Fig. 2 dargestellt ist, das erste Ringfilterelement 3 und das zweite Ringfilterelement 6 zwar koaxial zueinander angeordnet sind, jedoch keinen axialen Versatz zueinander bzw. keinen axialen Abstand zueinander besitzen. Allen Ausführungsformen gemein ist jedoch, dass sämtliche Ringfilterelemente 3, 6 und 7 in Reihe zueinander geschaltet und daher nacheinander durchströmt werden. Ebenso sämtlichen Ausführungsformen gemein ist ein mäanderförmiger Durchfluss der Ringfilterelemente 3, 6 und 7, der beider Filtereinrichtung 1 (Kraftstofffilter 1 a) gemäß der Fig. 1 besonders ausgeprägt ist.

Die untere Endscheibe 5 des ersten Ringfilterelementes 3 weist an ihrem inneren Rand einen Vorsprung 61 auf, an dem dichtend das zweite Ringfilterelement 6 anliegt.

In der ersten Ausführungsform in Fig. 1, weist das zweite Ringfilterelement 6 eine obere Endscheibe 62 und eine untere Endscheibe 63 auf. Das hier gezeigte zweite Ringfilterelement 6 weist weiterhin einen Faltenstern aus zur Koaleszenz geeignetem Material auf, es kann alternativ zum Faltenstern eine äquivalente Form gewählt werden, z.B. ein zwischen zwei Schutzschichten befindliches Gestrick aus Cellulose oder Glasfasern. Zur Abstützung in Strömungsrichtung benötigt das zweite Ringfilterelement 6 eine Außenzarge 64. Diese Außenzarge 64 ist fest mit den jeweiligen Endscheiben 62 und 63 des zweiten Ringfilterelementes 6 verbunden. Die beiden Endscheiben 62 und 63 weisen geeignete Dichtungsaufnahmen auf um Dichtung 65 und 65'aufzunehmen, die das zweite Ringfilterelement 6 gegen die untere Endscheibe 5 des ersten Ringfilterelementes 3 und gegen den Dom des Funktionsträgers 53 dichten. Hierzu weist der Dom des Funktionsträgers 53 geeignete Gegenkonturen zur Dichtungsanlage auf. Die jeweilige Ausgestaltung der Dichtungskonturen sowohl am Funktionsträger 53 und an den Endscheiben 62, 63 hängt von der Gestaltung des zweiten Ringfilterelementes 6 ab.

In der ersten Ausführungsform weist das dritte Ringfilterelement 7 einen Stützrahmen 66 auf, in dem der Endabscheider in Form eines hydrophoben Gewebes befestigt ist. In Fig. 1 weist das dritte Ringfilterelement 7 die Form eines Ringes auf. Gemäß Fig. 1 ist es nach unten geschlossen mit einem Boden 67 an dem eine Dichtung 68 anliegt, die gegenüber dem Funktionsträger 53 dichtet. Dieser Stützrahmen 66 kann an dem Vorsprung 69 des Funktionsträgers 53 befestigt werden. Falls das dritte Ringfilterelement 7 eine andere Form aufweist muss der Funktionsträger 53 angepasst werden. Ist es gewollt das dritte Ringfilterelement 7 austauschbar zu machen, so muss eine Verbindung 70 zwischen dem Vorsprung 69 und dem Stützrahmen 66 lösbar sein, z.B. in Form einer Verschraubung, Verklipsung oder Verrastung. Im anderen Fall kann das dritte Ringfilterelement fest mit dem Funktionsträger 53 verbunden werden, z.B. durch Verschweißung mit demselben.

Die Montage gestaltet sich für das erste Ausführungsbeispiel wie folgt: Als erstes muss das untere Adapterelement 9 auf den Funktionsträgerteil 53" aufgesteckt werden. Nach Anbringen des äußeren Funktionsträgerteils 53' zusammen mit dem dritten Ringfilterelement 7 am Teil 53" am Funktionsträgerteil 53" wird darüber das zweite Ringfilterelement 6 auf den Funktionsträger 53 aufgesteckt. Zum Schluss wird das erste Ringfilterelement 3 mit seiner Endscheibe 5 am Funktionsträger 53 und am Adapterelement 9 befestigt. Die obere Endscheibe 4 des ersten Ringfilterelementes 3 liegt mittels einer weiteren Dichtung 52'" dicht am oberen Ende des Funktionsträgers 53 an. Bei einem Wechsel der Filtereinrichtung 1 wird diese aus dem Gehäuse 2 komplett entnommen. Dann kann man die einzelnen Teile von einander trennen und nur das austauschen, was nötig ist.

In Fig. 2 ist eine alternative Ausführungsform dargestellt. Hier ist das erste Ringfilterelement 3 fast gleich wie im ersten Ausführungsbeispiel. An den Endscheiben 4 und 5 mussten Änderungen vorgenommen werden, um das zweite Ringfilterelement 6 dicht daran befestigen zu können. Beide Endscheiben 4 und 5 weisen nach innen weisende Kanten 71 und 71' auf. Sie dienen als Anlagefläche der Dichtungen 65 und 65' des zweiten Ringfilterelementes 6. Dieses ist im zweiten Ausführungsbeispiel anders gestaltet. Es besitzt sehr reduzierte Endscheiben 62 und 63 mit Nuten für die Dichtungen 65 und 65'. An den Endscheiben 62 und 63 ist die äußere Stützzarge 64 befestigt. An ihr liegt das in diesem Fall dünne Filtermedium 72 an, das vor allem Koaleszenzeigenschaften haben soll, und auf der Innenseite, also stromauf des Filtermediums 72 befinden sich Stabilisierungsrippen 73, um dem dünnen Filtermedium 72 halt zu geben.

Auch in diesem Ausführungsbeispiel ist das dritte Ringfilterelement 7 aus einem Stützrahmen 66 und einem hydrophoben Sieb gebildet. Der Stützrahmen 66 ist an der Verbindung 70 mit dem Funktionsträger 53 lösbar befestigt, durch geeignete Verbindungsmittel. Mittels einer Dichtung 68 ist das dritte Ringfilterelement 7 gegenüber dem Funktionsträger 53 gedichtet, so dass keine Vermischung der Reinseite 56 mit dem noch wasserhaltigen Kraftstoff stromauf des dritten Ringfilterelementes 7 erfolgt. Bei Bedarf kann das dritte Ringfilterelement 7 unlösbar mit dem Funktionsträger 53 verbunden sein, z.B. durch Verschweißen. Im Kanal 80 der sich zwischen der unteren Endscheibe 5 des ersten Ringfilterelementes 3 und dem Vorsprung 69 des Funktionsträgers 53 befindet können Strömungsleitelemente vorgesehen werden, um die Wasserabscheiderate zu erhöhen. Diese Strömungsleitelemente können insbesondere derart ausgebildet sein, dass sie eine tangentiale, das heißt parallel zur Oberfläche des Filterelements 7 strömende Strömung erzeugen.

Die Montage gestaltet sich für das zweite Ausführungsbeispiel wie folgt: Als erstes muss das untere Adapterelement 9 auf den Funktionsträgerteil 53" aufgesteckt werden. Nach Anbringen des äußeren Funktionsträgerteils 53' zusammen mit dem dritten Ringfilterelement 7 am Teil 53" wird darüber das erste Ringfilterelement 3 mit darin integriertem zweiten Ringfilterelement 6 auf den Funktionsträger 53 aufgesteckt. Zum Schluss wird das erste Ringfilterelement 3 mit seiner Endscheibe 5 am Funktionsträger 53 und am Adapterelement 9 befestigt. Die obere Endscheibe 4 des ersten Ringfilterelementes 3 liegt mittels einer weiteren Dichtung 52"' dicht am oberen Ende des Funktionsträgersteils 53"' an. Bei einem Wechsel der Filtereinrichtung 1 wird diese aus dem Gehäuse 2 komplett entnommen. Dann kann man die einzelnen Teile von einander trennen und nur das austauschen, was nötig ist.

Betrachtet man das Kraftstofffilter 1a gemäß der Fig. 1, so kann man erkennen, dass sämtliche Ringfilterelemente 3, 6 und 7 radial durchströmt sind und zwar das erste Ringfilterelement 3 von außen nach innen, das zweite Ringfilterelement 6 von innen nach außen und das dritte Ringfilterelement 7 wieder von außen nach innen. Im Unterschied dazu ist bei dem Kraftstofffilter 1 a gemäß der Fig. 2 auch das zweite Ringfilterelement 6 von außen nach innen durchströmt.

Generell ist das erste Ringfilterelement 3 als Schmutzfilter ausgebildet und dient daher zum Herausfiltern von Schmutzpartikeln. Das erste Ringfilterelement 3 kann zudem eine zumindest geringe Coaleszerfunktion aufweisen und dadurch im Kraftstoff vorhandene Wassertröpfchen vergrößern. Das zweite Ringfilterelement 6 ist vorzugsweise als reiner Coaleszer ausgebildet und vergrößert die emulgierten Wassertröpfchen weiter. Als Material für das zweite Ringfilterelement 6 kann beispielsweise eine native Zellulose verwendet werden, die wiederum als Vlies, als Gewirke, als Gestrick oder als Gewebe ausgebildet ist. Selbstverständlich können auch andere oder weitere Coaleszermaterialien in der erwähnten Gewebe- oder Vlies- oder Gewirkeform verwendet werden. Das dritte Ringfilterelement 7 schließlich ist als hydrophober Endabscheider und zugleich als Schmutzfilter ausgebildet, wobei als Material für das dritte Ringfilterelement 7 ein hydrophobes und feinmaschiges Netz gewählt wird. Dieses hydrophobe Netz hindert die von dem ersten und zweiten Ringfilterelement 3 und 6 vergrößerten Wassertröpfchen an einem Durchtritt, so dass diese in einem unterhalb des dritten Ringfilterelementes 7 gelegenen Wassersammelraum 8 gesammelt werden können. Das erfindungsgemäße Kraftstofffilter 1 a ist somit in der Lage, eine besonders hohe Filtration zu bewirken und zugleich den zu filternden Kraftstoff möglichst viel an mitgeführtem Wasser zu entziehen, wodurch insbesondere eine Korrosionsneigung zuverlässig reduziert werden kann. Die Strömung des zu filternden Kraftstoffs innerhalb der Filtereinrichtung 1 ist dabei mit Strömungspfeilen 8 dargestellt.

Betrachtet man die Kraftstofffilter 1a gemäß den Fig. 1 und 2, so kann man erkennen, dass die einzelnen Ringfilterelemente 3, 6, 7 separat zueinander ausgebildet sind und dadurch einzeln ausgetauscht werden können. Zur Befestigung bzw. zur Halterung der einzelnen Ringfilterelemente 3, 6 und 7 in dem Kraftstofffilter 1a sind Adapterelemente 9,9' vorgesehen, die miteinander und mit zumindest einem der Ringfilterelemente 3, 6, 7 über eine jeweilige Steckverbindung 10 verbunden werden.

Betrachtet man die Fig. 3a und 3b, so kann man erkennen, dass das zweite Ringfilterelement 6 bei dem gemäß der Fig. 2 dargestellten Kraftstofffilter 1 a als Filtermedium lediglich ein Gestrick bzw. ein Gewirke oder ein Vlies aufweist und dadurch als reiner Coaleszer ausgebildet ist. Der Begriff "Ringfilterelement" ist somit in diesem Fall nur im übertragenen Sinne zu verstehen. Beim zweiten Ringfilterelement 6 gemäß der Ausführungsform nach Fig. 1 hingegen ist der Begriff "Ringfilterelement" korrekt.

Mit dem erfindungsgemäßen Kraftstofffilter 1 a, das generell in übertragenem Sinne auch für andere Fluidfilter anwendbar ist, kann somit eine besonders effektive Filtrierung des zu filternden Fluids, insbesondere des zu filternden Kraftstoffs erreicht werden, wobei dieses/dieser nicht nur gefiltert, sondern zusätzlich auch entwässert werden kann. Es ist somit mit dem erfindungsgemäßen Fluidfilter bzw. dem erfindungsgemäßen Kraftstofffilter 1 a sowohl ein Herausfiltern von Feststoffen als auch ein Herausfiltern von Flüssigkeiten, beispielsweise von Wasser, möglich. Durch die Möglichkeit, die Ringfilterelemente 3, 6 und 7 einzeln und damit separat voneinander auszutauschen und zu ersetzen, kann zudem die Wartungsfreundlichkeit des erfindungsgemäßen Kraftstofffilters 1 a deutlich verbessert werden.

## Patentansprüche

1. Kraftstofffilter (1a) mit einem zumindest zweiteiligen Gehäuse (2), in welchem ein erstes Ringfilterelement (3) angeordnet ist,
**dadurch gekennzeichnet,**
- **dass** zusätzlich ein zweites Ringfilterelement (6) und ein drittes Ringfilterelement (7) vorgesehen sind,
- **dass** sämtliche Ringfilterelemente (3,6,7) koaxial zueinander und zumindest zwei Ringfilterelemente (3,7) in Axialrichtung versetzt zueinander angeordnet sind,
- **dass** sämtliche Ringfilterelemente (3,6,7) in Reihe geschaltet und daher nacheinander durchströmt sind,
- **dass** die Ringfilterelemente (3,6,7) separat und damit einzeln austauschbar ausgebildet sind,
- **dass** Adapterelemente (9,9',9") vorgesehen sind, die miteinander und mit zumindest einem Ringfilterelement (3,6,7) über eine jeweilige Steckverbindung (10) verbunden sind,
- **dass** eines der Adapterelemente (9,9',9") einen Fortsatz (55) aufweist, der eine Leerlauföffnung im Gehäuse (2) bei eingesetztem Filterelement (3) verschließt.

2. Kraftstofffilter nach Anspruch 1,
**dadurch gekennzeichnet,**
**dass** sämtliche Ringfilterelemente (3,6,7) radial durchströmt sind und zwar
- das erste Ringfilterelement (3) von außen nach innen,
- das zweite Ringfilterelement (6) von innen nach außen oder von außen nach innen und
- das dritte Ringfilterelement (7) wieder von außen nach innen.

3. Kraftstofffilter nach Anspruch 1 oder 2,
**dadurch gekennzeichnet,**
**dass** das erste Ringfilterelement (3) als Partikelfilter ausgebildet ist.

4. Kraftstofffilter nach einem der Ansprüche 1 bis 3,
**dadurch gekennzeichnet,**
**dass** das zweite Ringfilterelement (6) als Koaleszer ausgebildet ist.

5. Kraftstofffilter nach einem der Ansprüche 1 bis 4,
**dadurch gekennzeichnet,**
**dass** das dritte Ringfilterelement (7) als hydrophober Endabscheider und Partikelfilter ausgebildet ist.

6. Kraftstofffilter nach einem der Ansprüche 1 bis 5,
**dadurch gekennzeichnet,**
**dass** das zweite Ringfilterelement (6) ein Vlies, ein Gewirke, ein Gestrick oder ein Gewebe mit Koaleszenzeigenschaften aufweist.

7. Kraftstofffilter nach einem der Ansprüche 1 bis 6,
**dadurch gekennzeichnet,**
**dass** das dritte Ringfilterelement (7) ein hydrophobes, feinmaschiges Netz mit der Funktion als Wasserendabscheider aufweist.

8. Kraftstofffilter nach einem der Ansprüche 1 bis 7,
**dadurch gekennzeichnet,**
**dass** die Ringfilterelemente (3,6,7) axial beabstandet zueinander angeordnet sind.

## Claims

1. A fuel filter (1a) having an at least two-part housing (2), in which a first annular filter element (3) is arranged,
**characterised in that**
- a second annular filter element (6) and a third annular filter element (7) are also provided,
- all the annular filter elements (3, 6, 7) are arranged coaxially to each other and at least two annular filter elements (3, 7) are arranged offset to each other in the axial direction,
- all the annular filter elements (3, 6, 7) are connected in series and therefore flow passes through them in succession,
- the annular filter elements (3, 6, 7) are formed such that they can be replaced separately and individually,
- adapter elements (9, 9', 9") are provided, which are connected to each other and to at least one annular filter element (3, 6, 7) by means of a respective plug-in connection (10),
- one of the adapter elements (9, 9', 9") has a continuation (55), which closes a no-load opening in the housing (2) when the filter element (3) is inserted.

2. The fuel filter according to Claim 1,
**characterised in that**
flow passes radially through all the annular filter elements (3, 6, 7), through
- the first annular filter element (3) from the outside inwards,
- the second annular filter element (6) from the inside outwards or from the outside inwards, and
- the third annular filter element (7) again from the outside inwards.

3. The fuel filter according to Claim 1 or 2,
**characterised in that**
the first annular filter element (3) is formed as a particle filter.

4. The fuel filter according to one of Claims 1 to 3,
**characterised in that**
the second annular filter element (6) is formed as a coalescer.

5. The fuel filter according to one of Claims 1 to 4,
**characterised in that**
the third annular filter element (7) is formed as a hydrophobic final separator and particle filter.

6. The fuel filter according to one of Claims 1 to 5,
**characterised in that**
the second annular filter element (6) has a fleece or a looped, knitted or woven fabric with coalescence properties.

7. The fuel filter according to one of Claims 1 to 6,
**characterised in that**
the third annular filter element (7) has a hydrophobic, fine-meshed net having the function of a final water separator.

8. The fuel filter according to one of Claims 1 to 7,
**characterised in that**
the annular filter elements (3, 6, 7) are arranged at an axial distance from each other.

## Revendications

1. Filtre à carburant (1a) comportant un logement (2) en au moins deux parties, dans lequel un premier élément de filtre annulaire (3) est disposé, **caractérisé en ce que**
- un deuxième élément de filtre annulaire (6) et un troisième élément de filtre annulaire (7) sont prévus en supplément,
- tous les éléments de filtre annulaire (3, 6, 7) sont disposés coaxialement les uns aux autres et au moins deux éléments de filtre annulaire (3, 7) sont disposés en décalage les uns par rapport aux autres dans la direction axiale,
- tous les éléments de filtre annulaire (3, 6, 7) sont branchés en série et sont donc traversés par un flux les uns après les autres,
- les éléments de filtre annulaire (3, 6, 7) sont conçus séparément et sont donc remplaçables individuellement,
- des éléments d'adaptateur (9, 9', 9") sont prévus, qui sont reliés les uns aux autres et sont reliés à au moins un élément de filtre annulaire (3, 6, 7) par l'intermédiaire d'une liaison enfichable (10) respective,
- un des éléments d'adaptateur (9, 9', 9") présente un prolongement (55), qui obture une ouverture de marche à vide dans le logement (2) lorsque l'élément de filtre annulaire (3) est inséré.

2. Filtre à carburant selon la revendication 1,
**caractérisé en ce**
**que** tous les éléments de filtre annulaire (3, 6, 7) sont traversés radialement par un flux et en particulier
- le premier élément de filtre annulaire (3) de l'extérieur vers l'intérieur,
- le deuxième élément de filtre annulaire (6) de l'intérieur vers l'extérieur ou de l'extérieur vers l'intérieur et
- le troisième élément de filtre annulaire (7) à nouveau de l'extérieur vers l'intérieur.

3. Filtre à carburant selon la revendication 1 ou 2,
**caractérisé en ce**
**que** le premier élément de filtre annulaire (3) est conçu comme un filtre à particules.

4. Filtre à carburant selon une des revendications 1 à 3,
**caractérisé en ce**
**que** le deuxième élément de filtre annulaire (6) est conçu comme un coalesceur.

5. Filtre à carburant selon une des revendications 1 à 4,
**caractérisé en ce**
**que** le troisième élément de filtre annulaire (7) est conçu comme un séparateur final hydrophobe et filtre à particules.

6. Filtre à carburant selon une des revendications 1 à 5,
**caractérisé en ce**
**que** le deuxième élément de filtre annulaire (6) présente une étoffe non tissée, un tricot, un tissu de mailles ou un tissu avec des propriétés de coalescence.

7. Filtre à carburant selon une des revendications 1 à 6,
**caractérisé en ce**
**que** le troisième élément de filtre annulaire (7) présente un filet hydrophobe à mailles serrées ayant une fonction de séparateur final d'eau.

8. Filtre à carburant selon une des revendications 1 à 7,
**caractérisé en ce**
**que** les éléments de filtre annuaire (3, 6, 7) sont disposés en étant espacés axialement les uns des autres.
